# FASCICULE DE BREVET EUROPEEN

(11) **EP 0 894 479 B1**
(45) Date de publication et mention de la délivrance du brevet: **01.10.2003**
(21) Numéro de dépôt: 98113572.6
(22) Date de dépôt: 20.07.1998
(51) Int. Cl.: A61C 1/18

(54) **Instrument dentaire à paliers à air comportant des moyens d'alignement des paliers**
Zahnärtzliches Instrument mit mit Ausrichtmitteln versehenen Luftlagern
Dental instrument with air bearings having alignment means for the bearings

(30) Priorité: 29.07.1997 FR 9709642
(43) Date de publication de la demande: 03.02.1999
(73) Titulaire: Bien-Air Holding SA, CH-2504 Bienne (CH)
(72) Inventeur: Mosimann, Vincent, 2520 La Neuveville (CH)
(74) Mandataire: Patry, Didier Marcel Pierre

(56) Documents cités:
- FR-A- 1 416 632
- GB-A- 1 551 626
- US-A- 4 533 324

## Description

La présente invention concerne un instrument dentaire, et en particulier une tête d'une pièce à main, notamment à turbine, destinée à supporter et à entraîner en rotation un outil, tel qu'une fraise.

Une tête de pièce à main de type classique est représentée à la figure 1 (voir p. ex. le document GB 1 551 626 A).

La tête qui est représentée sur cette figure et qui est repérée par la référence générale T1 comporte un corps C1 formant un élément de bâti, à l'intérieur duquel est logé un rotor R1 formant un élément d'entraînement d'un outil OL.

Le rotor R1 comporte un dispositif de blocage de l'outil OL, qui est associé à un système de commande de ce dispositif. Sur ce rotor R1 est en outre chassée une turbine TB1 qui est alimentée en air moteur par des canaux, ici non représentés.

La tête T1 est supportée à l'intérieur du corps C1 par l'intermédiaire d'organes de support SH1 et SB1. Ces organes de support comportent des paliers à air PH1 et PB1 constitués par des douilles DH1 et DB1 qui reçoivent un fluide amené depuis le corps C1 par des canaux, non représentés. Ces paliers et ce fluide permettent la création d'un film d'interface dans une zone de contact entre les paliers PH1, PB1 et le rotor R1.

Les organes de support SH1 et SB1 assurent le guidage en rotation du rotor R1 ainsi que son maintien flottant à l'intérieur du corps C1. En effet, ces deux organes de support SH1 et SB1 comportent en outre des joints toriques JT (un seul étant référencé) qui sont interposés entre ces organes et la paroi interne du corps C1, ces joints constituant des moyens amortisseurs qui sont destinés à absorber des vibrations et des contraintes radiales appliquées sur l'outil OL. Plus particulièrement, les douilles DH1 et DB1 des paliers à air PH1 et PB1 sont engagées dans des cages CH1 et CB1 qui comportent des gorges extérieures radiales G dans lesquelles sont montés les joints toriques JT.

Ce type d'instrument dentaire fournit des résultats satisfaisants mais ne peut pas être utilisé dans certaines applications. En effet, les praticiens ont besoin dans des conditions spécifiques d'utilisation de ces instruments, d'un couple moteur élevé sur la zone de travail de l'outil. Or, les instruments à turbine avec palier à air ont toujours été limités en couple moteur et donc en puissance. Pour cette raison, les praticiens doivent utiliser des instruments à turbines munis, non pas de paliers à air, mais de roulement à billes, qui fournissent les caractéristiques mécaniques de couple souhaitées. Cependant, les instruments qui sont pourvus de tels roulements ont une durée de vie limitée à cause des opérations répétées de stérilisation.

En effet, ces roulements ont des cages qui sont réalisées en matière synthétique et qui sont imprégnées d'un produit de lubrification indispensable au bon fonctionnement des roulements, dans la mesure où les outils de ces instruments tournent à de très hautes vitesses (plus de 100'000 tr/mn).

La stérilisation de ces instruments se fait en autoclave, à haute pression (plusieurs bars) et à des températures élevées (au-dessus de 100°c). Chaque opération de stérilisation chasse peu à peu le produit de lubrification qui ne peut pas être parfaitement remplacé par du lubrifiant qui est, si possible, injecté de façon préventive par le praticien dans l'instrument à des fins de maintenance.

Or, ces opérations de stérilisation ne peuvent désormais plus être évitées et elles sont de plus en plus fréquentes, pour éviter la transmission de virus et de toute maladie infectieuse. La durée de vie des instruments dentaires à roulements est donc sensiblement écourtée.

On cherche donc à améliorer les caractéristiques des instruments dentaires ayant des paliers à air, puisque ces instruments ne connaissent pas les problèmes de vieillissement dus à la stérilisation.

Après de nombreux essais, il a été déterminé que le problème du couple dans des instruments avec paliers à air venait d'un défaut d'alignement des deux paliers, c'est-à-dire d'un défaut de coaxialité de ces paliers, l'un par rapport à l'autre.

On a pu également déterminer que le défaut d'alignement dynamique qui diminuait les caractéristiques de l'outil était étroitement lié à un défaut d'alignement statique des deux paliers.

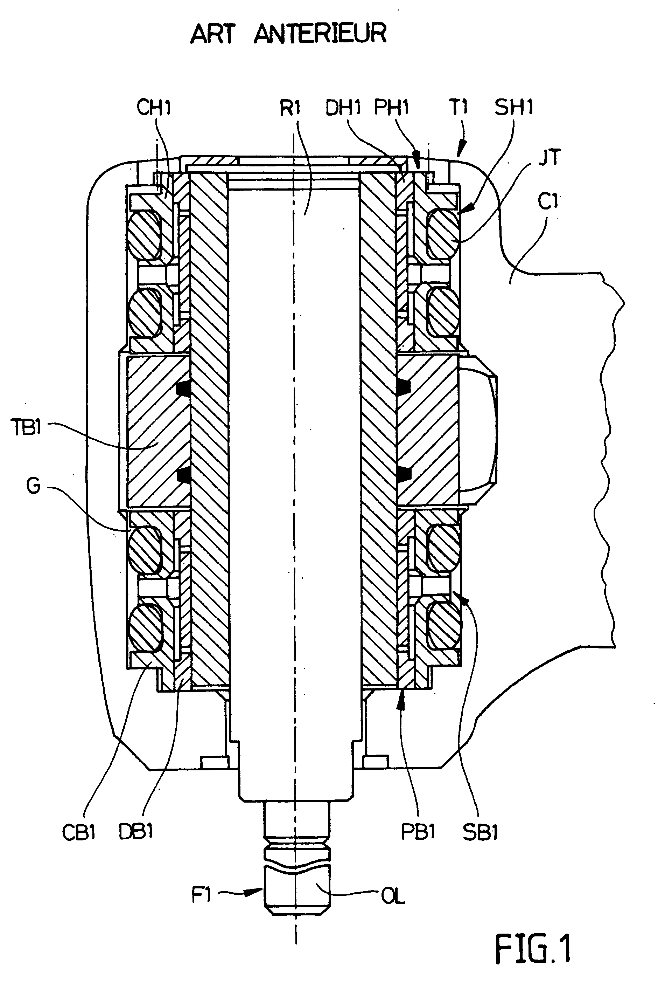

En outre, on a observé en fonctionnement que les efforts latéraux exercés sur la pointe de l'outil, dans la zone de travail (voir flèche F1 sur la figure 1), avaient pour effet de cintrer le corps de l'outil et de provoquer une rupture d'alignement des deux paliers ainsi qu'une rupture du film d'air à l'interface palier-rotor. Dans ces conditions, le rotor perd de sa vitesse, et le couple moteur chute.

Ainsi, la présente invention a-t-elle pour but de fournir un instrument dentaire et en particulier une tête de pièce à main ayant des paliers à air capables de résister aux opérations de stérilisation mais pouvant fournir un couple moteur nettement supérieur au couple fournit par les instruments actuels de ce type.

A cet effet, l'invention a pour objet un instrument dentaire du type comportant :
- un corps formant un élément de bâti;
- un rotor logé à l'intérieur du corps et destiné à former un élément d'entraînement d'un outil;
- des organes de support du rotor, logés à l'intérieur du corps et interposés entre le rotor et le corps pour assurer le guidage et le maintien flottant du rotor à ces deux extrémités, ces organes de support comportant des moyens d'amenée d'un fluide et au moins deux paliers à air assurant la dispersion d'un film d'interface dans une zone de contact entre lesdits paliers et le rotor, l'un desdits paliers qui est le plus proche de la zone de travail de l'outil constituant un palier inférieur, tandis que l'autre constitue un palier supérieur, lesdits organes de support coopérant avec des moyens amortisseurs pouvant absorber notamment des contraintes radiales appliquées sur l'outil, cet instrument étant caractérisé en ce que les organes de support sont pourvus de moyens de liaison qui les rendent solidaires l'un de l'autre et qui constituent une liaison rigide entre ces deux organes, cette liaison permettant d'assurer l'alignement statique et dynamique du palier supérieur par rapport au palier inférieur y compris en présence de contraintes latérales subies par l'outil et permettant d'augmenter le couple moteur de l'instrument.

Mais d'autres caractéristiques et avantages de l'invention apparaîtront à la lecture de la description détaillée qui suit, faite en référence aux dessins annexés qui sont donnés uniquement à titre d'exemple, et dans lesquels :
- la figure 1 est une vue en coupe longitudinale d'une partie d'une tête d'un instrument dentaire de l'art antérieur;
- la figure 2 est une vue en coupe longitudinale d'une partie d'une tête d'un instrument dentaire selon l'invention;

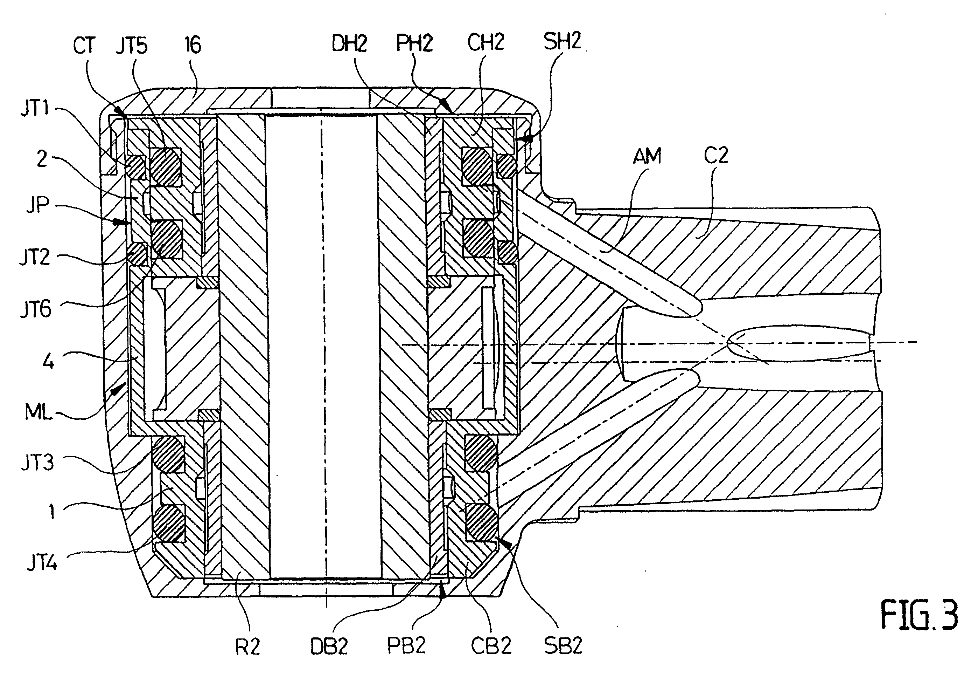

- la figure 3 est une vue en coupe similaire à la figure 2, mais réalisée selon un plan de coupe décalé permettant de voir des canaux d'amenée d'un fluide;
- la figure 4 est une vue de dessus de la tête de la figure 2, montrant de façon agrandie les détails de construction d'une goupille de positionnement angulaire; et
- la figure 5 est une vue en coupe longitudinale montrant une cartouche de l'instrument selon l'invention au cours d'une étape d'usinage et de montage du procédé selon l'invention.

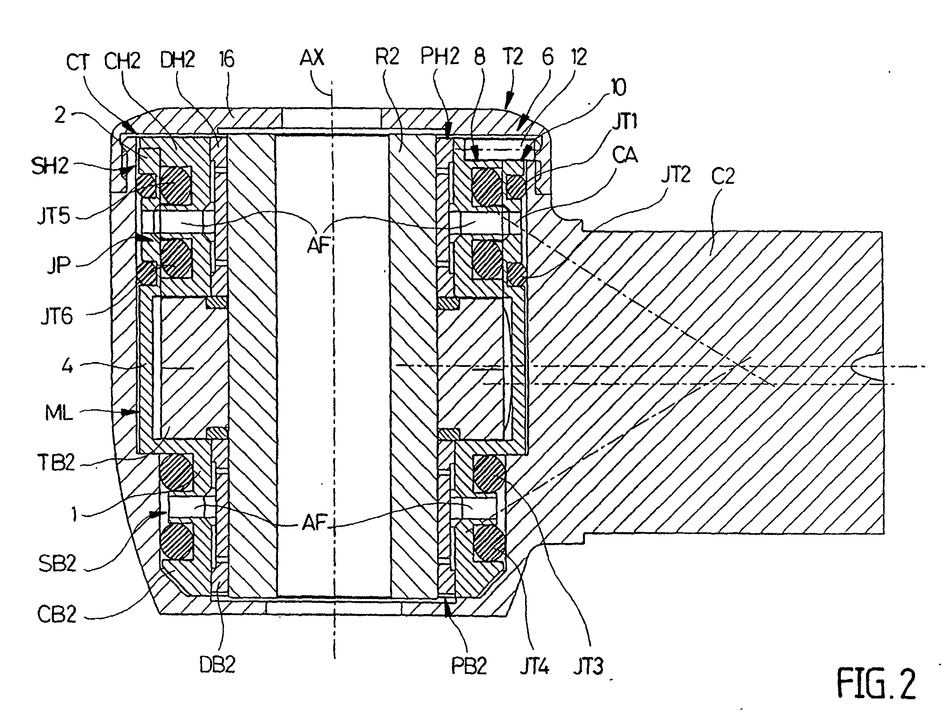

En se référant désormais à la figure 2, on décrira ci-après un instrument dentaire selon l'invention et en particulier une tête de pièce à main, repérée ici par la référence générale T2.

La tête T2 comporte comme la tête T1 décrite précédemment, un corps C2 formant un élément de bâti et un rotor R2 logé à l'intérieur du corps C2. Le rotor R2 est destiné à former un élément d'entraînement d'un outil, ici non représenté.

L'instrument selon l'invention comporte en outre des organes de support SH2 et SB2 positionnés aux deux extrémités du rotor R2 et assurant le support flottant du rotor R2 à l'intérieur du corps C2.

Ces organes de support SH2 et SB2 sont logés intégralement dans le corps C2 et sont interposés radialement entre le rotor R2 et le corps C2 pour assurer de façon classique le guidage en rotation du rotor R2.

Les organes de support SH2 et SB2 comportent des moyens AF d'amenée d'un fluide et, dans cet exemple, au moins deux paliers à air PH2 et PB2 assurant l'injection et la dispersion d'un film d'interface dans une zone de contact, non référencée, entre les paliers PH2 et PB2 et le rotor R2.

Les paliers PH2 et PB2 sont constitués par des douilles DH2 et DB2 et comportent des canaux radiaux traversant, non référencés, qui débouchent dans la zone de contact avec le rotor et qui communiquent avec un ensemble de conduits et de chambres, non référencés, ménagés pour assurer la distribution du fluide d'interface.

L'un desdits paliers référencé PB2 qui est le plus proche de la zone de travail de l'outil constitue un palier inférieur, tandis que l'autre référencé PH2 constitue un palier supérieur.

Les douilles DH2 et DB2 des paliers PH2 et PB2 sont réalisées de préférence dans des matériaux durs à faible coefficient de frottement. Elles peuvent être réalisées dans des matériaux composites, ou être réalisées dans des matériaux plus tendres, revêtus d'un matériaux assurant en surface une grande dureté, ou être traitées par différents procédés physiques ou physico-chimiques assurant cette dureté superficielle. Ces douilles peuvent également être traitées en surface pour ménager sur celles-ci un revêtement fournissant un faible coefficient de frottement dans leur zone de contact avec le rotor.

Comme on le voit sur les figures, les paliers PH2 et PB2 des organes de support SH2 et SB2 comportent en outre des cages CH2 et CB2, dites respectivement cage supérieure et cage inférieure, dans lesquelles sont engagées et montées à force, par chassage, les douilles DH2 et DB2.

On précisera ici que l'invention n'est pas limitée à la seule représentation des paliers qui est donnée aux figures, où des douilles rapportées DH2 et DB2 sont chassées dans les cages CH2 et CB2. L'invention s'étend également à d'autres réalisations structurelles, notamment dans lesquelles les cages CH2 et CB2 font office directement de palier en comportant par exemple un traitement de surface ou un revêtement, conférant à la zone de contact avec le rotor sa dureté et le coefficient de frottement souhaités.

L'instrument dentaire selon l'invention comporte en outre des moyens amortisseurs JT1 à JT4 qui sont constitués par des joints toriques pouvant absorber notamment des contraintes radiales appliquées sur l'outil.

La cage inférieure CB2 repose en bout par son extrémité inférieure contre une surface solidaire du corps C2. Elle est engagée avec un jeu radial important dans le corps C2 et elle porte deux joints toriques JT3 et JT4, grâce à deux gorges radiales externes prévues à cet effet. Les deux joints JT3 et JT4 reposent en appui radial contre la surface du corps C2.

Le corps de la cage CB2 est formé d'une paroi 1 qui s'étend longitudinalement de façon coaxiale au rotor R2, et qui se prolonge radialement sous une turbine TB2 qui est chassée de façon classique sur le rotor R2.

La cage supérieure CH2 est quant-à-elle engagée avec un ajustement gras, dans une paroi externe 2 de l'organe de support supérieur SH2. On notera de façon avantageuse que la paroi 2 recouvre pratiquement toute la hauteur de la cage CH2 qui repose par un épaulement contre l'extrémité libre de cette paroi 2.

Cette cage supérieure CH2 porte aussi deux joints toriques JT5 et JT6, grâce à deux gorges radiales externes prévues à cet effet. Ces deux joints toriques JT5 et JT6 n'ont, par opposition aux autres joints toriques de cette tête T2, aucune fonction d'amortissement du fait de l'ajustement gras entre les surfaces correspondantes de la cage CH2 et de la paroi 2. Les joints JT5 et JT6 n'ont qu'une fonction d'étanchéité. La fonction d'amortissement à ce niveau de la tête T2 est assurée par les joints JT1 et JT2 qui sont engagés dans des gorges de la paroi la plus externe 2 des moyens de support SH2.

L'instrument selon l'invention comporte avantageusement un manchon cylindrique 4 qui entoure la turbine TB2 et qui vient de matière avec les deux parois 1 et 2. Ce manchon 4 constitue des moyens de liaison ML qui rendent les organes de support SH2 et SB2 solidaires l'un de l'autre et qui constituent une liaison rigide entre ces deux organes. Ces moyens de liaison ML permettent d'assurer l'alignement statique et dynamique du palier supérieur PH2 par rapport au palier inférieur PB2 y compris en présence de contraintes latérales subies par l'outil, dans sa zone de travail.

La paroi 2 et ces moyens de liaison ML constituent une jupe JP dans laquelle vient se loger le palier supérieur PH2. On notera que le palier supérieur PH2 est logé presque intégralement, c'est-à-dire sur la majeure partie de sa hauteur dans la jupe JP.

Etant donné que le palier supérieur PH2 est monté à l'intérieur de la jupe JP qui est liée rigidement au palier inférieure PB2, ce palier supérieur PH2 et son axe longitudinal AX sont positionnés, dans l'instrument T2, par rapport au palier inférieur PB2 et par rapport à son axe longitudinal qui est confondu avec l'axe AX. On obtient ainsi un excellent alignement statique et dynamique de ces deux paliers.

Par ailleurs, l'ajustement du palier supérieur PH2 et de la jupe JP offre, en plus du positionnement et des moyens d'alignement susmentionnés, la possibilité de sortir la cage supérieure CH2 et son palier PH2 de la jupe JP pour ensuite les remettre en place, exactement dans la même position.

Comme on le voit sur la figure 2, la jupe JP comporte des canaux CA permettant le transfert du fluide depuis le corps C2 vers le palier supérieur PH2.

Ainsi, la paroi 1 du palier inférieur PB2, le manchon 4 et la paroi 2 de l'organe de support supérieur SH2 constituent une seule et unique pièce monobloc que l'on qualifie de cartouche. Cette cartouche CT forme un sous-ensemble de l'instrument, qui contient le rotor R2 avec sa turbine TB2 ainsi que le palier supérieur PB2 avec sa douille DH2 et sa cage CH2. Ce sous-ensemble peut être mis en place dans la cavité prévue à cet effet dans le corps C2 et peut être extrait de ce corps sans avoir à monter et démonter les différents composants isolément et l'un après l'autre.

On notera en outre que cette cartouche qui incorpore le palier inférieur PB2 constitue dans le corps C2 le référentiel du palier supérieur PH2 et de son axe longitudinal AX.

On précisera aussi que les moyens de liaison ML et en particulier la paroi 2 et le palier supérieur PH2 comportent des moyens de positionnement 6 prévus pour assurer au moins le positionnement angulaire du palier supérieur PH2 par rapport aux moyens de liaison ML.

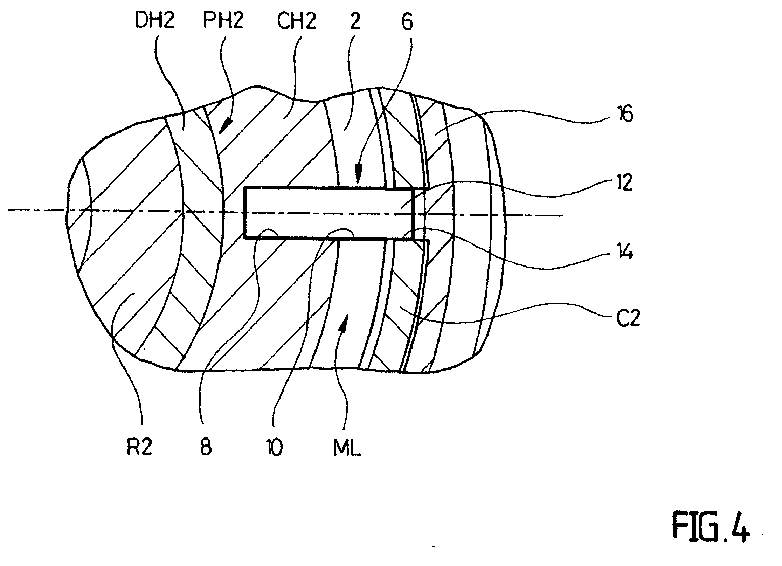

En particulier, les moyens de positionnement 6 sont constitués par au moins deux encoches 8 et 10 (figure 4) ménagées respectivement dans le palier PH2 et'dans les moyens de liaison ML, ces encoches 8 et 10 étant destinées à recevoir une goupille 12, s'étendant radialement.

Les moyens de positionnement 6 comportent en outre une troisième encoches 14 ménagée dans le corps C2 et destinée à recevoir la goupille 12 pour assurer le positionnement de l'ensemble moyens de liaison-palier par rapport au corps C2. Ces moyens de positionnement 6 permettent de monter et de démonter l'ensemble des composants de la tête T2 et de remettre exactement selon une même orientation angulaire le palier PH2 par rapport au palier PB2. Cet agencement permet également d'obtenir l'usinage de profils tels que les deux paliers PH2 et PB2 soient après montage parfaitement coaxiaux et alignés.

La tête T2 est fermée par un chapeau classique 16 qui est vissé sur le corps C2, cette fermeture pouvant être également constituée par un bouton poussoir lié au système de tenue de l'outil dans le rotor.

Par ailleurs et bien que cela n'ait pas été représenté aux figures, l'instrument selon l'invention comporte de façon classique des canaux d'amenée et d'échappement de l'air moteur (désigné sous l'appellation "drive"), le manchon 4 comportant des orifices ménagés au voisinage de la turbine TB2 et capables d'assurer la communication du fluide entre ces canaux et la chambre de la cartouche CT.

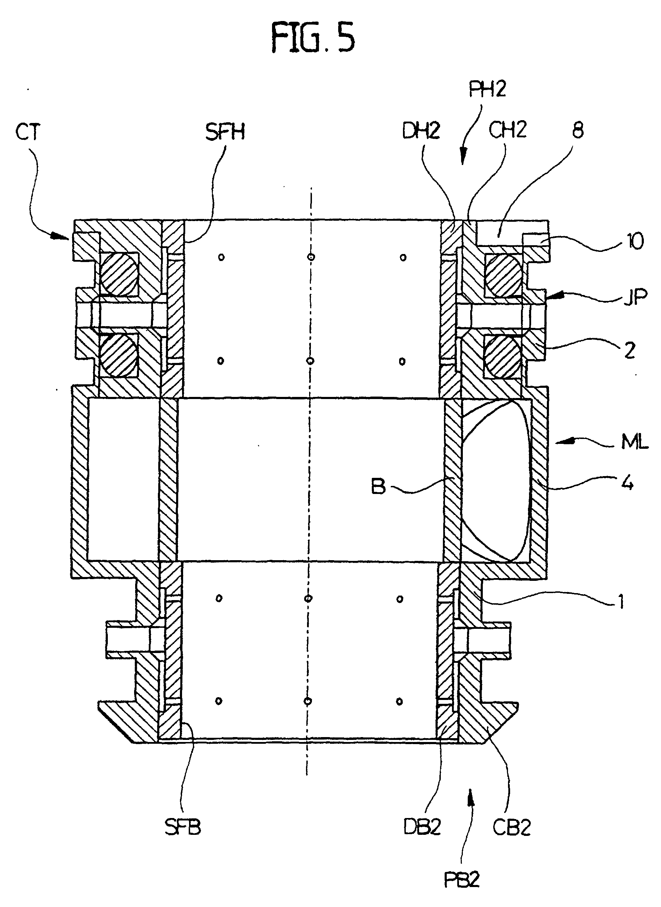

La figure 5 montre la cartouche CT sans les joints JT1 à JT4 et sans le rotor R2.

Ainsi, la structure qui vient d'être décrite permet avantageusement de mettre en oeuvre un nouveau procédé d'usinage et de montage des deux paliers PH2 et PB2.

En effet, selon ce procédé, on se munit dans une première étape de la cartouche CT que l'on positionne sur un bâti, ici non représenté. Ensuite, on introduit dans cette cartouche CT une bague ou entretoise B qui vient reposer axialement contre un flanc latéral du palier inférieur PB2 et qui vient reposer en particulier dans cet exemple contre la douille correspondante DB2. Cette bague qui a un diamètre intérieur supérieur au diamètre intérieur des douilles DH2 et DB2, vient donc prendre la place de la turbine TB2, dans la cartouche CT.

Ensuite, on introduit dans la cartouche CT le palier supérieur PH2 muni dans cet exemple de sa douille DH2 et de sa cartouche CH2. Dans cette étape, le palier supérieur PH2 est orienté selon une position angulaire spécifique et déterminée par rapport à la cartouche CT, grâce aux encoches 8 et 10. Cette orientation est réalisée soit en plaçant la goupille 12 dans ces encoches soit en plaçant un outil ayant sensiblement la même forme.

Ensuite, on vient avec un outil d'usinage classique, non représenté, aléser et polir les surfaces internes SFH et SFB des paliers PH2 et PB2 pour les amener à des dimensions précises et leur fournir un état de surface de haute qualité.

On remarque que dans cette étape les surfaces SFH et SFB sont alésées simultanément avec un même outil et que le référentiel utilisé lors de cet alésage (ce référentiel étant la cartouche CT) est le même que celui qui est utilisé pour positionner les deux paliers PH2 et PB2 dans le corps C2.

En effet, après cette opération, on sort le palier supérieur PH2 et la bague B de la cartouche CT. Ensuite, on peut monter le rotor R2 et le palier PH2 dans la cartouche CT qui fait office de logement, ce montage se faisant soit indépendamment du corps C2, soit après que la cartouche CT, munie des joints JT1 à JT4, ait été introduite dans le corps C2.

Enfin, la goupille 12 est mise en place dans les encoches 8, 10 et 14. On obtient ainsi une parfaite coaxialité des surfaces SFH et SFB des deux paliers et une reproductibilité du positionnement relatif de ces surfaces après les opérations d'alésage-polissage et de montage et de remontage.

On notera en outre que les moyens de liaison ML comportent au moins une gorge radiale s'ouvrant vers l'extérieur et dans laquelle est logé le moyen amortisseur JT1, dans cet exemple.

## Revendications

1. Instrument dentaire du type comportant :
- un corps (C2) formant un élément de bâti;
- un rotor (R2) logé à l'intérieur du corps (C2) et destiné à former un élément d'entraînement d'un outil;
- des organes (SH2, SB2) de support du rotor (R2), logés à l'intérieur du corps (C2) et interposés entre le rotor (R2) et le corps (C2) pour assurer le guidage et le maintien flottant du rotor (R2) à ces deux extrémités, ces organes de support (SH2, SB2) comportant des moyens (AF, CA) d'amenée d'un fluide et au moins deux paliers à air (PH2, PB2) assurant la dispersion d'un film d'interface dans une zone de contact entre lesdits paliers (PH2, PB2) et le rotor (R2), l'un desdits paliers (PB2) qui est le plus proche de la zone de travail de l'outil constituant un palier inférieur, tandis que l'autre (PH2) constitue un palier supérieur, lesdits organes de support (SH2, SB2) coopérant avec des moyens amortisseurs (JT1 à JT4) pouvant absorber notamment des contraintes radiales appliquées sur l'outil, **caractérisé en ce que** les organes de support (SH2, SB2) sont pourvus de moyens de liaison (ML) qui les rendent solidaires l'un de l'autre et qui constituent une liaison rigide entre ces deux organes, cette liaison permettant d'assurer l'alignement statique et dynamique du palier supérieur (PH2) par rapport au palier inférieur (PB2) y compris en présence de contraintes latérales subies par l'outil et permettant d'augmenter le couple moteur de l'instrument.

2. Instrument selon la revendication 1, **caractérisé en ce que** les moyens de liaison (ML) sont constitués par un manchon (4) venant de matière avec les parois (1, 2) des deux organes de support (SH2, SB2).

3. Instrument selon la revendication 1 ou 2, **caractérisé en ce que** lesdits moyens de liaison (ML) constituent une jupe (JP) dans laquelle vient se loger le palier supérieur (PH2).

4. Instrument selon la revendication 3, **caractérisé en ce que** le palier supérieur (PH2) est logé sur la majeure partie de sa hauteur dans ladite jupe (JP).

5. Instrument selon la revendication 3 ou 4, **caractérisé en ce que** le palier supérieur (PH2) est monté avec un ajustement gras à l'intérieur de ladite jupe (JP).

6. Instrument selon l'une des revendications 3 à 5, **caractérisé en ce que** ladite jupe (JP) comporte des canaux (CA) pour le transfert du fluide depuis ledit corps (C2) vers le palier supérieur (PH2).

7. Instrument selon l'une des revendications 1 à 6, **caractérisé en ce que** lesdits moyens de liaison (ML) comportent au moins une gorge radiale s'ouvrant vers l'extérieur et dans laquelle est logé un moyen amortisseur (JT1).

8. Instrument selon la revendication 7, **caractérisé en ce que** le moyen amortisseur (JT1) est un joint torique qui repose contre une surface dudit corps (C2).

9. Instrument selon l'une des revendications 1 à 8, **caractérisé en ce que** lesdits moyens de liaison (ML) et le palier supérieur (PH2) comportent des moyens de positionnement (6) prévus pour assurer au moins le positionnement angulaire dudit palier (PH2) par rapport auxdits moyens de liaison (ML).

10. Instrument selon la revendication 9, **caractérisé en ce que** les moyens de positionnement (6) sont constitués par au moins deux encoches (8, 10) ménagées respectivement dans le palier (PH2) et dans les moyens de liaison (ML), ces encoches (8, 10) étant destinées à recevoir une goupille (12).

11. Instrument selon la revendication 10, **caractérisé en ce que** les moyens de positionnement (12) comportent en outre une troisième encoches (14) ménagée dans le corps (C2) et destinée à recevoir la goupille (12) pour assurer le positionnement de l'ensemble moyens de liaison-palier par rapport au corps (C2).

12. Instrument selon l'une des revendications précédentes, **caractérisé en ce qu'**il est constitué par une pièce à main à turbine.

## Patentansprüche

1. Dentalinstrument des Typs, der enthält:
- einen Körper (C2), der ein Tragelement bildet;
- einen Rotor (R2), der sich im Körper (C2) befindet und dazu vorgesehen ist, ein Werkzeugantriebsmittel zu bilden;
- Organe (SH2, SB2) zum Stützen des Rotors (R2), die im Körper (C2) angeordnet und zwischen den Rotor (R2) und den Körper (C2) eingesetzt sind und gewährleisten, daß der Rotor (R2) an seinen beiden Enden geführt und gelagert gehalten wird, wobei diese Stützorgane (SH2, SB2) Fluidzuführmittel (AF, CA) und wenigstens zwei Luftlager (PH2, PB2) umfassen, die die Verteilung eines Grenzflächenfilms in einer Kontaktzone zwischen den Lagern (PH2, PB2) und dem Rotor (R2) sicherstellen, wobei eines der Lager (PB2), das sich am nächsten bei der Arbeitszone des Werkzeugs befindet, ein unteres Lager bildet, während das andere (PH2) ein oberes Lager bildet, wobei die Stützorgane (SH2, SB2) mit Dämpfungsmitteln (JT1 bis JT4) zusammenwirken, die insbesondere radiale Beanspruchungen absorbieren können, die auf das Werkzeug ausgeübt werden können, **dadurch gekennzeichnet, daß** die Stützorgane (SH2, SB2) mit Verbindungsmitteln (ML) versehen sind, die sie fest miteinander verbinden und eine starre Verbindung zwischen diesen beiden Organen bilden, wobei diese Verbindung ermöglicht, die statische und dynamische Ausrichtung des oberen Lagers (PH2) auf das untere Lager (PB2) auch bei Vorhandensein seitlicher Beanspruchungen durch das Werkzeug sicherzustellen, und ermöglicht, das Motordrehmoment des Instruments zu erhöhen.

2. Instrument nach Anspruch 1, **dadurch gekennzeichnet, daß** die Verbindungsmittel (ML) aus einer Hülse (4) gebildet sind, die einstückig mit den Wänden (1, 2) der beiden Sützorgane (SH2, SB2) ist.

3. Instrument nach Anspruch 1 1 oder 2, **dadurch gekennzeichnet, daß** die Verbindungsmittel (ML) einen Mantel (JP) bilden, in dem sich das obere Lager (PH2) befindet.

4. Instrument nach Anspruch 3, **dadurch gekennzeichnet, daß** sich das obere Lager (PH2) mit dem größeren Teil seiner Höhe im Mantel (JP) befindet.

5. Instrument nach Anspruch 3 oder 4, **dadurch gekennzeichnet, daß** das obere Lager (PH2) mit einer satten Passung im Mantel (JP) angebracht ist.

6. Instrument nach einem der Ansprüche 3 bis 5, **dadurch gekennzeichnet, daß** der Mantel (JP) zwei Kanäle (CA) für die Übertragung des Fluids vom Körper (C2) zum oberen Lager (PH2) enthält.

7. Instrument nach einem der Ansprüche 1 bis 6, **dadurch gekennzeichnet, daß** die Verbindungsmittel (ML) wenigstens eine radiale Nut enthalten, die nach außen mündet und in der sich ein Dämpfungsmittel (JT1) befindet.

8. Instrument nach Anspruch 7, **dadurch gekennzeichnet, daß** das Dämpfungsmittel (JT1) eine O-Ring-Dichtung ist, die an einer Oberfläche des Körpers (C2) anliegt.

9. Instrument nach einem der Ansprüche 1 bis 8, **dadurch gekennzeichnet, daß** die Verbindungsmittel (ML) und das obere Lager (PH2) Positionierungsmittel (6) enthalten, die dazu vorgesehen sind, wenigstens die Winkelpositionierung des Lagers (PH2) in bezug auf die Verbindungsmittel (ML) zu gewährleisten.

10. Instrument nach Anspruch 9, **dadurch gekennzeichnet, daß** die Pcsitionierungsmittel (6) wenigstens durch zwei Kerben (8, 10) gebildet sind, die im Lager (PH2) bzw. in den Verbindungsmitteln (ML) ausgespart sind, wobei diese Kerben (8, 10) dazu vorgesehen sind, einen Stift (12) aufzunehmen.

11. Instrument nach Anspruch 10, **dadurch gekennzeichnet, daß** die Positionierungsmittel (12) außerdem eine dritte Kerbe (14) umfassen, die im Körper (C2) ausgespart ist und dazu vorgesehen ist, den Stift (12) aufzunehmen, um die Positionierung der Gesamtheit aus den Verbindungsmitteln und dem Lager in bezug auf den Körper (C2) sicherzustellen.

12. Instrument nach einem der vorangehenden Ansprüche, **dadurch gekennzeichnet, daß** es durch ein Handteil mit Turbine gebildet ist.

## Claims

1. Dental instrument of the type comprising:
- a body (C2) forming a frame element;
- a rotor (R2) housed inside the body (C2) and intended to form a tool drive element;
- support units (SH2, SB2) for the rotor (R2), housed inside the body (C2) and inserted between the rotor (R2) and the body (C2) for guiding and keeping the rotor (R2) floating at its two ends, these support units (SH2, SB2) comprising means (AF, CA) for bringing a fluid and at least two air bearings (PH2, PB2) for dispersing an interface film in a contact zone between said bearings (PH2, PB2) and the rotor (R2), one of said bearings (PB2) which is the closest to the work zone of the tool forming a lower bearing, whereas the other (PH2) forms an upper bearing, said support units (SH2, SB2) co-operating with damping means (JT1 to JT4) able to absorb, in particular, radial stress applied to the tool, **characterised in that** the support units (SH2, SB2) are provided with connecting means (ML) which secure them to each other and which form a rigid connection between these two units, this connection allowing the upper bearing (PH2) to be aligned statically and dynamically with respect to the lower bearing (PB2) including in the presence of lateral stress experienced by the tool and allowing to increase the drive torque of the instrument.

2. Instrument according to claim 1, **characterised in that** the connecting means (ML) are formed by a sleeve integral with the walls (1, 2) of the two support units (SH2, SB2).

3. Instrument according to claim 1 or 2, **characterised in that** said connecting means (ML) form a skirt (JP) in which the upper bearing (PH2) is housed.

4. Instrument according to claim 3, **characterised in that** the upper bearing (PH2) is housed on most of its height in said skirt (JP).

5. Instrument according to claim 3 or 4, **characterised in that** the upper bearing (PH2) is mounted with a friction fit inside said skirt (JP).

6. Instrument according to any of claims 3 to 5, **characterised in that** said skirt (JP) includes channels (CA) for transferring the fluid from said body (C2) to the upper bearing (PH2).

7. Instrument according to any of claims 1 to 6, **characterised in that** said connecting means (ML) include at least one radial groove opening outwards and in which a damping means (JT1) is housed.

8. Instrument according to claim 7, **characterised in that** the damping means (JT1 ) is an O-ring, which rests against a surface of said body (C2).

9. Instrument according to any of claims 1 to 8, **characterised in that** said connecting means (ML) and the upper bearing (PH2) include positioning means (6) provided for ensuring at least the angular positioning of said bearing (PH2) with respect to said connecting means (ML).

10. Instrument according to claim 9, **characterised in that** the positioning means (6) are formed by at least two notches (8,10) arranged respectively in the bearing (PH2) and in the connecting means (ML), these notches (8, 10) being intended to receive a pin (12).

11. Instrument according to claim 10, **characterised in that** the positioning means (12) further include a third notch (14) arranged in the body (C2) and intended to receive the pin (12) for ensuring the positioning of the connecting means-bearing assembly with respect to the body (C2).

12. Instrument according to any of the preceding claims, **characterised in that** it is formed by a turbine hand-piece.
